# EUROPEAN PATENT APPLICATION

(11) **EP 4 779 554 A1**
(43) Date of publication of application: **22.07.2026**
(21) Application number: 24865138.2
(22) Date of filing: 08.08.2024
(51) Int. Cl.: G06T 1/40, G06T 1/00

(54) **IMAGE PROCESSING DEVICE, METHOD FOR OPERATING IMAGE PROCESSING DEVICE, AND PROGRAM FOR OPERATING IMAGE PROCESSING DEVICE**

(30) Priority: 12.09.2023 JP 2023147962
(71) Applicant: FUJIFILM Corporation, Tokyo 106-8620 (JP)
(72) Inventor: KOBAYASHI, Yuki, Saitama-shi, Saitama 331-9624 (JP); KURANOSHITA, Masashi, Saitama-shi, Saitama 331-9624 (JP)
(74) Representative: Parker, Andrew James
(86) International application number: PCT/JP2024/028554
(87) International publication number: WO 2025/057632

(57) **Abstract**

An image processing device includes a processor configured to: derive a feature value vector from a target image for color correction; and input a pair of the feature value vector and a pixel value of each pixel of the target image to a machine learning model for color correction, and cause the machine learning model for color correction to output a color-corrected pixel value.

## Description

### BACKGROUND OF THE INVENTION

### 1. Field of the Invention

The technology of the present disclosure relates to an image processing device, an operation method of an image processing device, and an operation program of an image processing device.

### 2. Description of the Related Art

JP2021-150855A discloses an image processing device including a conversion unit, a storage unit, a detection unit, and a display unit. The conversion unit converts color image data of an object into monochrome image data. The storage unit stores the color image data as a color candidate image of the object in association with the monochrome image data that is converted by the conversion unit. The detection unit detects the object from input image data. The display unit displays the color candidate image associated with the object in a case where the object detected by the detection unit is stored in the storage unit. The conversion unit converts the input image data into the color image data by using a trained model based on the color image data selected from among the color candidate images displayed by the display unit.

### SUMMARY OF THE INVENTION

One embodiment according to the technology of the present disclosure provides an image processing device, an operation method of an image processing device, and an operation program of an image processing device capable of achieving the reduction in memory capacity.

The present disclosure relates to an image processing device comprising: a processor configured to: derive a feature value vector from a target image for color correction; and input a pair of the feature value vector and a pixel value of each pixel of the target image to a machine learning model for color correction, and cause the machine learning model for color correction to output a color-corrected pixel value.

It is preferable that the processor is configured to input the target image to a machine learning model for feature value vector derivation, and cause the machine learning model for feature value vector derivation to output the feature value vector.

It is preferable that the processor is configured to resize the target image to a size processable by the machine learning model for feature value vector derivation.

The present disclosure relates to an operation method of an image processing device, the operation method comprising: deriving a feature value vector from a target image for color correction; and inputting a pair of the feature value vector and a pixel value of each pixel of the target image to a machine learning model for color correction, and causing the machine learning model for color correction to output a color-corrected pixel value.

The present disclosure relates to an operation program of an image processing device, the operation program causing a computer to execute a process comprising: deriving a feature value vector from a target image for color correction; and inputting a pair of the feature value vector and a pixel value of each pixel of the target image to a machine learning model for color correction, and causing the machine learning model for color correction to output a color-corrected pixel value.

### BRIEF DESCRIPTION OF THE DRAWINGS

FIG. 1 is a diagram illustrating a user terminal and an image management server.
FIG. 2 is a block diagram illustrating computers constituting the user terminal and the image management server.
FIG. 3 is a block diagram illustrating processing units of a CPU of the user terminal.
FIG. 4 is a block diagram illustrating processing units of a CPU of the image management server.
FIG. 5 is a diagram illustrating data stored in an image DB.
FIG. 6 is a diagram illustrating a model group.
FIG. 7 is a diagram illustrating processing of the image management server in a case where a color correction request is transmitted from the user terminal.
FIG. 8 is a diagram illustrating processing of the processing unit.
FIG. 9 is a diagram illustrating a configuration of a model for feature value vector derivation.
FIG. 10 is a diagram illustrating processing in a training phase of an autoencoder.
FIG. 11 is a diagram illustrating processing of the processing unit.
FIG. 12 is a flowchart illustrating a processing procedure of the image management server.

### DESCRIPTION OF THE PREFERRED EMBODIMENTS

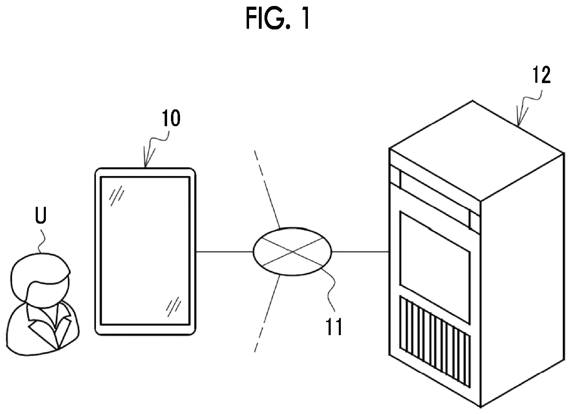

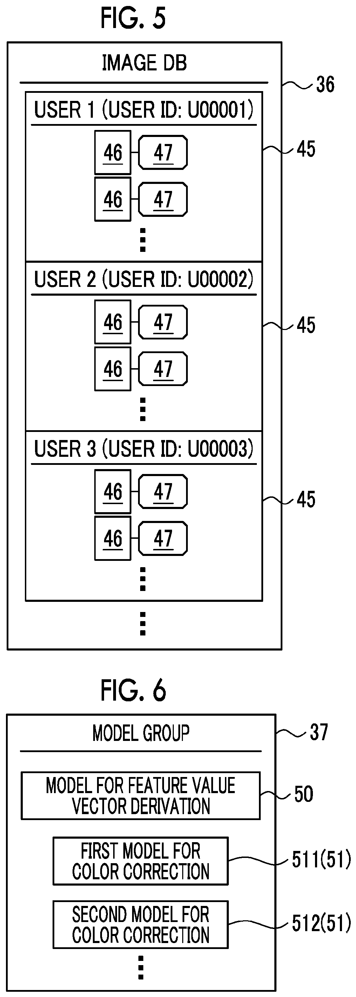

As an example, as illustrated in FIG. 1, a user U owns a user terminal 10. The user terminal 10 is a device having a camera function, an image playback/display function, an image transmission/reception function, and the like. The camera function of the user terminal 10 has an imaging element such as a complementary metal-oxide-semiconductor (CMOS) image sensor, and obtains an image 46 (see FIG. 5) of a subject by forming an image of subject light, which is taken in from a lens, on the imaging element. Specifically, the user terminal 10 is a smartphone, a tablet terminal, a compact digital camera, a mirrorless single-lens camera, a laptop personal computer, and the like.

The user terminal 10 is connected to an image management server 12 via a network 11 such that the user terminal 10 and the image management server 12 can communicate with each other. The network 11 is, for example, a wide area network (WAN) such as the Internet or a public communication network. The user terminal 10 transmits (uploads) the image 46 to the image management server 12. In addition, the user terminal 10 receives (downloads) the image 46 from the image management server 12.

The image management server 12 is, for example, a server computer or a workstation, and is an example of an "image processing device" according to the technology of the present disclosure. A plurality of user terminals 10 of a plurality of users U are connected to the image management server 12 via the network 11.

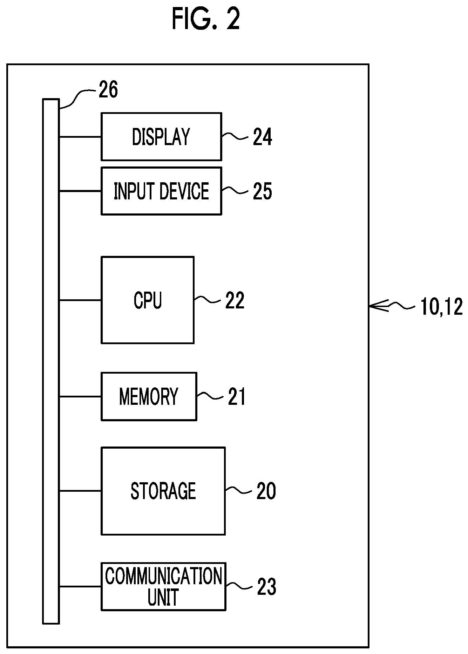

As illustrated in FIG. 2 as an example, computers constituting the user terminal 10 and the image management server 12 basically have the same configuration, and comprise a storage 20, a memory 21, a central processing unit (CPU) 22, a communication unit 23, a display 24, and an input device 25. These units are connected to each other through a busline 26.

The storage 20 is a hard disk drive that is built in the computers constituting the user terminal 10 and the image management server 12 or that is connected to the computers through a cable or a network. Alternatively, the storage 20 is a disk array provided with a plurality of hard disk drives arranged in an array. A control program, such as an operating system, various application programs (hereinafter, abbreviated as AP), various data associated with these programs, and the like are stored in the storage 20. In addition, a solid state drive may be used instead of the hard disk drive.

The memory 21 is a work memory used by the CPU 22 to execute processing. The CPU 22 loads the program stored in the storage 20 into the memory 21, to execute processing in accordance with the program. As a result, the CPU 22 integrally controls the respective units of the computer. The CPU 22 is an example of a "processor" according to the technology of the present disclosure. In addition, the memory 21 may be built in the CPU 22.

The communication unit 23 is a network interface that performs control of transmitting various types of information via the network 11 and the like. The display 24 displays various screens. The various screens have an operation function using a graphical user interface (GUI). The computers constituting the user terminal 10 and the image management server 12 receive input of an operation instruction from the input device 25 through various screens. The input device 25 is, for example, a keyboard, a mouse, a touch panel, and a microphone for voice input.

In the following description, the respective units (the storage 20, the CPU 22, the display 24, and the input device 25) of the computer constituting the user terminal 10 are distinguished by adding a subscript "A" to the reference numerals thereof, and the respective units (the storage 20 and the CPU 22) of the computer constituting the image management server 12 are distinguished by adding a subscript "B" to the reference numerals thereof.

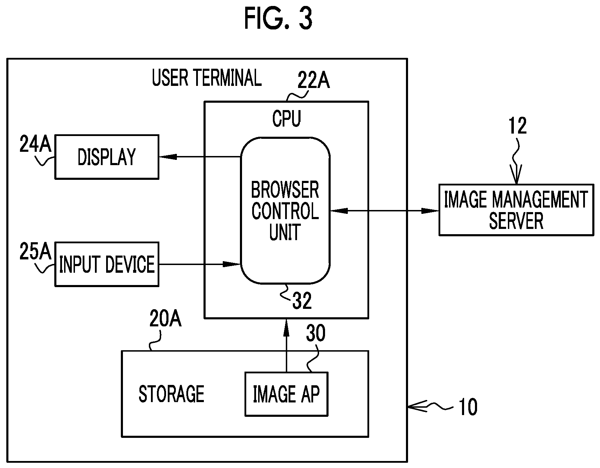

As illustrated in FIG. 3 as an example, an image AP 30 is stored in the storage 20A of the user terminal 10. The image AP 30 is installed in the user terminal 10 by the user U. In a case where the image AP 30 is activated, a CPU 22A of the user terminal 10 functions as a browser control unit 32 in cooperation with the memory 21 and the like. The browser control unit 32 controls the operation of the dedicated web browser of the image AP 30.

The browser control unit 32 reproduces various screens based on various screen data from the image management server 12, to display the reproduced various screens on the display 24A. Furthermore, the browser control unit 32 receives various operation instructions, which are input from the input device 25A by the user U, through various screens. The browser control unit 32 transmits various requests in accordance with the operation instructions to the image management server 12.

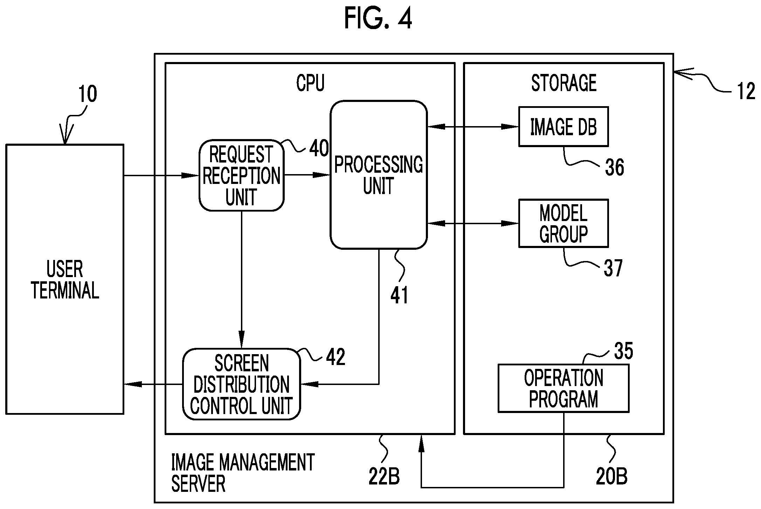

As illustrated in FIG. 4 as an example, an operation program 35 is stored in the storage 20B of the image management server 12. The operation program 35 is an AP for causing the computer constituting the image management server 12 to function as an "image processing device" according to the technology of the present disclosure. That is, the operation program 35 is an example of an "operation program of an image processing device" according to the technology of the present disclosure. The storage 20B also stores an image database (hereinafter, referred to as a DB) 36 and a model group 37. Although not illustrated in the drawing, the storage 20B stores a user identification data (ID) for uniquely identifying the user U, a password set by the user U, and a terminal ID for uniquely identifying the user terminal 10, as account information of the user U.

In a case where the operation program 35 is activated, the CPU 22B of the image management server 12 functions as a request reception unit 40, a processing unit 41, and a screen distribution control unit 42 in cooperation with the memory 21 and the like.

The request reception unit 40 receives various requests from the user terminal 10. The various requests include the terminal ID of the user terminal 10 that is a transmission source of the various requests. The request reception unit 40 outputs the various requests to the processing unit 41 and the screen distribution control unit 42.

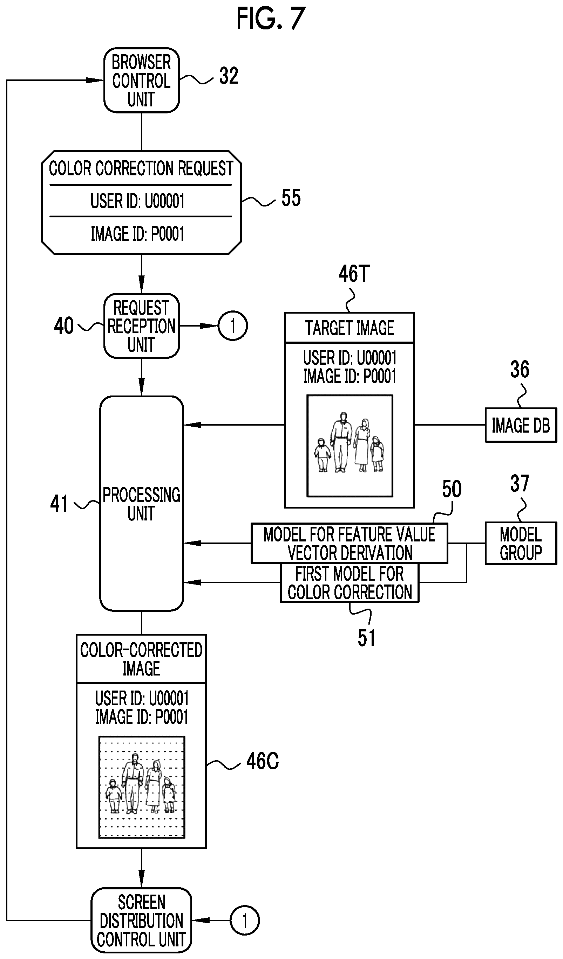

The processing unit 41 performs processing corresponding to the various requests from the request reception unit 40. The processing unit 41 stores, for example, the image 46 in the image DB 36 in response to a storage request of the image 46. Further, the processing unit 41 edits the image 46 in response to various editing requests of the image 46, such as a color correction request 55 (see FIG. 7). The processing unit 41 outputs the edited image 46 to the screen distribution control unit 42.

The screen distribution control unit 42 performs control of distributing the various screens to the user terminal 10. Specifically, the screen distribution control unit 42 distributes and outputs the various screens to the user terminal 10, which is the transmission source of the various requests, in the format of screen data for web distribution created by, for example, a markup language such as extensible markup language (XML). In this case, the screen distribution control unit 42 identifies the user terminal 10, which is the transmission source of the various requests, based on the terminal ID from the request reception unit 40. The various screens include a list display screen for a plurality of images 46, a playback display screen for one image 46, and the like. On the playback display screen, an instruction to edit the image 46, confirmation of the edited image 46, and the like are also performed. Another data description language such as JavaScript (registered trademark) object notation (JSON) may be used instead of the XML.

As illustrated in FIG. 5 as an example, the image DB 36 is provided with a storage area 45 for each user U. A user ID is registered in the storage area 45. Further, the image 46 and accessory information 47 are stored in the storage area 45 in association with each other. The accessory information 47 includes a plurality of items such as an imaging date and time, an imaging location, an F number, an International Organization for Standardization (ISO) sensitivity, a shutter speed, a focal length, the presence or absence of a flash, and a tag. A date and time when the image 46 is captured using the camera function of the user terminal 10 is registered as the imaging date and time. An address and/or a landmark name derived from latitude and longitude information obtained with a global positioning system (GPS) function of the user terminal 10 is registered as the imaging place. The tag is a word briefly representing the subject shown in the image 46. The tag includes a tag manually input by the user U or a tag derived using a machine learning model such as a subject discrimination model. The image 46 stored in the image DB 36 includes not only an image captured by the user U using the camera function of the user terminal 10 but also an image received from a family member, a friend, or the like of the user U or an image downloaded by the user U via the Internet or the like.

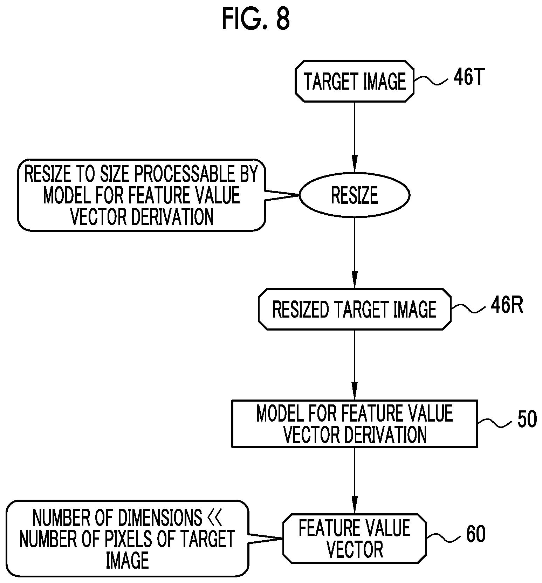

As illustrated in FIG. 6 as an example, the model group 37 includes a model for feature value vector derivation 50 and a model for color correction 51 such as a first model for color correction 511 and a second model for color correction 512. The model for feature value vector derivation 50 is a machine learning model for deriving a feature value vector 60 (see FIG. 8) from the image 46. That is, the model for feature value vector derivation 50 is an example of a "machine learning model for feature value vector derivation" according to the technology of the present disclosure.

The first model for color correction 511 is, for example, a machine learning model for color correction for making the image 46 have clear tones, which is generally called vivid color correction. The second model for color correction 512 is, for example, a machine learning model for color correction for making a black-and-white image 46 into a color image 46. The model for color correction 51 includes a color correction model for making the color image 46 into the black-and-white image 46 or a color correction model generally called sepia, soft focus, light leak, or whitening, in addition to the first model for color correction 511 and the second model for color correction 512. As can be seen from the example of the second model for color correction 512 and the like, the color correction may be input of one-dimensional black and white (gray gradation) and output of three-dimensional color (red, green, and blue (RGB) gradation), or vice versa. The model for color correction 51 is an example of a "machine learning model for color correction" according to the technology of the present disclosure.

As illustrated in FIG. 7 as an example, in a case where the user U issues a color correction instruction for the image 46 on the playback display screen, the browser control unit 32 of the user terminal 10 transmits the color correction request 55 to the image management server 12. The color correction request 55 includes the user ID, an image ID of the image 46 (hereinafter, referred to as a target image 46T) that is a target for the color correction, and a type of the color correction.

The request reception unit 40 of the image management server 12 receives the color correction request 55. The request reception unit 40 outputs the color correction request 55 to the processing unit 41 and the screen distribution control unit 42. The processing unit 41 accesses the image DB 36 to read out the image 46, that is, the target image 46T of the image ID specified in the color correction request 55 from the storage area 45 of the user U having the user ID specified in the color correction request 55. In addition, the processing unit 41 reads out the model for feature value vector derivation 50 and the model for color correction 51 corresponding to the type of the color correction of the color correction request 55 from the model group 37.

The processing unit 41 applies the model for feature value vector derivation 50 and the model for color correction 51 to the target image 46T to perform the color correction on the target image 46T. The processing unit 41 outputs the target image 46T that is color-corrected (hereinafter, referred to as a color-corrected image 46C) to the screen distribution control unit 42. The screen distribution control unit 42 generates screen data of the playback display screen of the color-corrected image 46C, and distributes the generated screen data to the user terminal 10 that is the transmission source of the color correction request 55.

As illustrated in FIG. 8 as an example, the processing unit 41 first resizes the target image 46T to a size processable by the model for feature value vector derivation 50, to obtain a resized target image 46R. More specifically, in a case where the target image 46T is larger than the size processable by the model for feature value vector derivation 50, the processing unit 41 performs pixel thinning processing on the target image 46T to obtain the resized target image 46R. On the contrary, in a case where the target image 46T is smaller than the size processable by the model for feature value vector derivation 50, the processing unit 41 performs pixel interpolation processing on the target image 46T to obtain the resized target image 46R. In a case where the target image 46T originally has a size processable by the model for feature value vector derivation 50, the processing unit 41 does not perform the resizing.

The processing unit 41 inputs the resized target image 46R to the model for feature value vector derivation 50, and causes the model for feature value vector derivation 50 to output the feature value vector 60. The feature value vector 60 is a set of a plurality of feature values. That is, the feature value vector 60 is multi-dimensional data. The number of feature values constituting the feature value vector 60, that is, the number of dimensions of the feature value vector 60 is significantly smaller than the number of pixels of the target image 46T. The number of pixels of the target image 46T is, for example, 12 million to 16 million, and the number of dimensions of the feature value vector 60 is, for example, 32 dimensions.

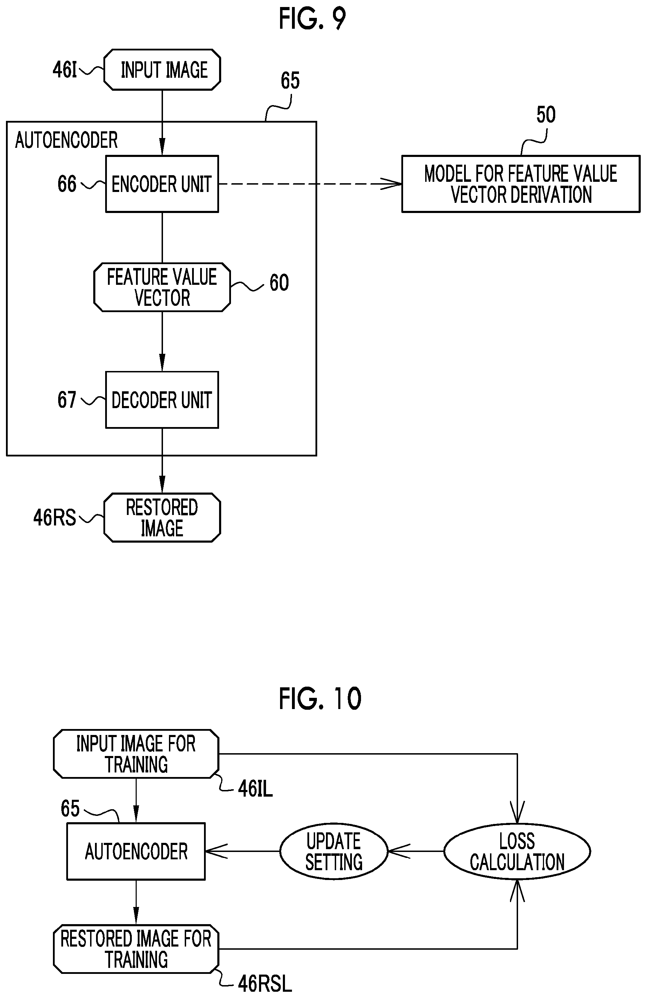

As illustrated in FIG. 9 as an example, an encoder unit 66 of an autoencoder 65 is repurposed as the model for feature value vector derivation 50. The autoencoder 65 includes a decoder unit 67 as well as the encoder unit 66. An input image 46I is input to the encoder unit 66. The encoder unit 66 converts the input image 46I into the feature value vector 60. The encoder unit 66 transmits the feature value vector 60 to the decoder unit 67. The decoder unit 67 generates a restored image 46RS of the input image 46I from the feature value vector 60.

The encoder unit 66 includes, as is well known, a convolutional layer that performs convolution processing using a filter, a pooling layer that performs pooling processing such as maximum value pooling, and the like. The decoder unit 67 has the same configuration. The encoder unit 66 extracts the feature value vector 60 by repeating, a plurality of times, the convolution processing by the convolutional layer and the pooling processing by the pooling layer on the input image 46I. The extracted feature value vector 60 represents features of a shape and a texture of the subject shown in the input image 46I.

As illustrated in FIG. 10 as an example, in a training phase before the encoder unit 66 is repurposed as the model for feature value vector derivation 50, the autoencoder 65 is trained by inputting an input image for training 46IL. The input image for training 46IL is obtained from a public large-scale image DB such as ImageNet. The autoencoder 65 outputs a restored image for training 46RSL in accordance with the input of the input image for training 461L. The autoencoder 65 performs loss calculation using a loss function based on the input image for training 46IL and the restored image for training 46RSL. Then, update settings of various coefficients (coefficients of the filter of the convolutional layer and the like) of the autoencoder 65 are made in accordance with a result of the loss calculation, and the autoencoder 65 is updated according to the update settings.

In the training phase of the autoencoder 65, the series of processing of the input of the input image for training 46IL to the autoencoder 65, the output of the restored image for training 46RSL from the autoencoder 65, the loss calculation, the update settings, and the update of the autoencoder 65 are repeatedly performed while the input image for training 46IL is replaced. The repetition of the series of processing is ended in a case where the restoration accuracy from the input image for training 46IL to the restored image for training 46RSL reaches a predetermined set level. The encoder unit 66 of the autoencoder 65 of which the restoration accuracy reaches the set level is stored in the storage 20B of the image management server 12 as the model for feature value vector derivation 50. The training may be ended in a case where the series of processing is repeated a set number of times regardless of the restoration accuracy from the input image for training 46IL to the restored image for training 46RSL.

The training of the autoencoder 65 may be performed by the image management server 12 or performed by a device different from the image management server 12. In the latter case, the encoder unit 66 of the trained autoencoder 65, that is, the model for feature value vector derivation 50 is transmitted from another device to the image management server 12, and the processing unit 41 stores the model for feature value vector derivation 50 in the storage 20B. The training of the autoencoder 65 (model for feature value vector derivation 50) may be continued even after the model for feature value vector derivation 50 is stored in the storage 20B.

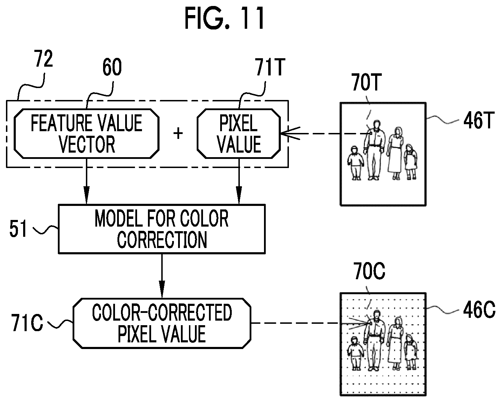

As illustrated in FIG. 11 as an example, the processing unit 41 integrates the feature value vector 60 and a pixel value 71T of one pixel 70T of the target image 46T to obtain input data 72 of the model for color correction 51. In a case where the number of dimensions of the feature value vector 60 is, for example, 32 dimensions and the pixel value 71T is, for example, three-dimensional color, the number of dimensions of the input data 72 is 32 + 3 = 35 dimensions. The input data 72 is an example of a "pair of the feature value vector and the pixel value of each pixel of the target image" according to the technology of the present disclosure.

The processing unit 41 inputs the input data 72 to the model for color correction 51, and causes the model for color correction 51 to output a color-corrected pixel value 71C. The color-corrected pixel value 71C is a pixel value of a pixel 70C of the color-corrected image 46C corresponding to the pixel 70T. The color-corrected pixel value 71C is an example of a "color-corrected pixel value" according to the technology of the present disclosure. The processing unit 41 repeats the processing on all the pixels 70T of the target image 46T to finally generate the color-corrected image 46C. The model for color correction 51 is a convolutional neural network having a convolutional layer, a pooling layer, and an appropriate activation function such as a rectified linear unit (ReLU) function.

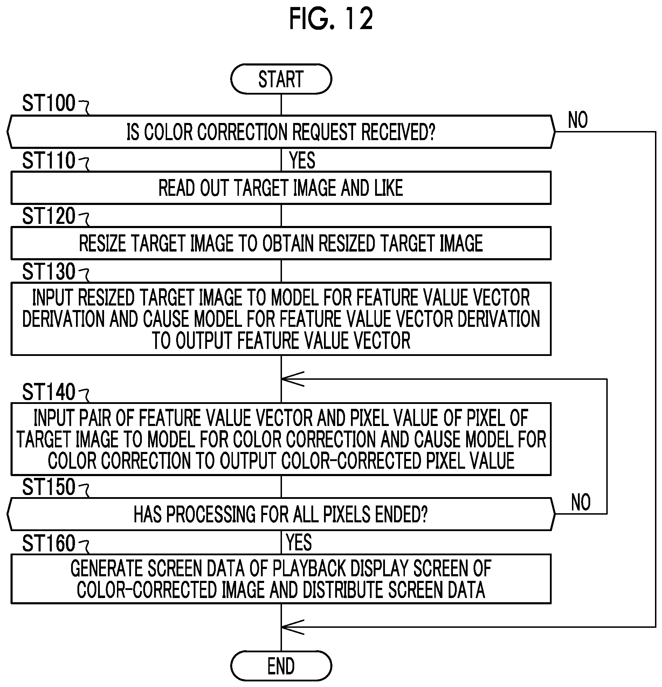

Next, an operation of the above-described configuration will be described with reference to a flowchart illustrated in FIG. 12 as an example. As illustrated in FIG. 3, the CPU 22A of the user terminal 10 functions as the browser control unit 32 by activation of the image AP 30. In addition, as illustrated in FIG. 4, the CPU 22B of the image management server 12 functions as the request reception unit 40, the processing unit 41, and the screen distribution control unit 42 by activating the operation program 35.

The user U captures the image 46 using the camera function of the user terminal 10. The image 46 is transmitted from the user terminal 10 to the image management server 12, and is stored in the image DB 36 by the processing unit 41.

The user U activates the image AP 30, selects the target image 46T for color correction from the list display screen, and then displays the target image 46T on the playback display screen. The user U issues the color correction instruction on the playback display screen. In a case where the color correction instruction is issued, as illustrated in FIG. 7, the color correction request 55 is transmitted from the browser control unit 32.

The request reception unit 40 receives the color correction request 55 (step ST100). The request reception unit 40 outputs the color correction request 55 to the processing unit 41 and the screen distribution control unit 42. The processing unit 41 reads out the target image 46T specified in the color correction request 55 from the image DB 36. In addition, the processing unit 41 reads out the model for feature value vector derivation 50 and the model for color correction 51 (step ST110).

As illustrated in FIG. 8, in the processing unit 41, the target image 46T is resized to a size processable by the model for feature value vector derivation 50, to obtain the resized target image 46R (step ST120). Then, the resized target image 46R is input to the model for feature value vector derivation 50, and the feature value vector 60 is output from the model for feature value vector derivation 50 (step ST130).

Next, as illustrated in FIG. 11, the feature value vector 60 and the pixel value 71T of the pixel 70T of the target image 46T are integrated to obtain the input data 72. Then, the input data 72 is input to the model for color correction 51, and the color-corrected pixel value 71C is output from the model for color correction 51 (step ST140). The processing of step ST140 is performed on all the pixels 70T of the target image 46T.

In a case where the processing of step ST140 is performed on all the pixels 70T of the target image 46T (YES in step ST150), the screen distribution control unit 42 generates the screen data of the playback display screen of the color-corrected image 46C, and distributes the screen data to the user terminal 10 that is the transmission source of the color correction request 55 (step ST160).

The user U confirms the color-corrected image 46C of the playback display screen. In a case where the color-corrected image 46C has a desired appearance, the user U inputs a color correction confirmation instruction. In a case where the color correction confirmation instruction is issued, a color correction confirmation request is transmitted from the browser control unit 32. The color correction confirmation request is received by the request reception unit 40 and is output to the processing unit 41. Then, the processing unit 41 stores the color-corrected image 46C in the image DB 36 in association with an original target image 46T.

The CPU 22B of the image management server 12 functions as the processing unit 41 as described above. The processing unit 41 derives the feature value vector 60 from the target image 46T for color correction. Then, the input data 72, which is a pair of the feature value vector 60 and the pixel value 71T of each pixel 70T of the target image 46T, is input to the model for color correction 51, and the color-corrected pixel value 71C is output from the model for color correction 51. Since the color correction is performed after the target image 46T is compressed into the feature value vector 60, the capacity of the memory 21 used for the color correction can be significantly reduced as compared with a case where the color correction is performed on the target image 46T itself. Therefore, it is possible to achieve the reduction in memory capacity.

The processing unit 41 inputs the target image 46T to the model for feature value vector derivation 50, and causes the model for feature value vector derivation 50 to output the feature value vector 60. Therefore, the feature value vector 60 that well represents the features of the shape and the texture of the subject shown in the target image 46T can be easily obtained.

The processing unit 41 resizes the target image 46T to a size processable by the model for feature value vector derivation 50. Therefore, the feature value vector 60 can be output from the model for feature value vector derivation 50 without any problem regardless of the size of the target image 46T.

The feature value vector 60 is not limited to the feature value vector output from the model for feature value vector derivation 50. A representative value (average value, maximum value, minimum value, median value, and the like) of the pixel value of the target image 46T, a representative value of the brightness value of the target image 46T, and the like may be used as the feature value vector 60.

Although the example has been described in which the encoder unit 66 of the autoencoder 65 is repurposed as the model for feature value vector derivation 50, the present disclosure is not limited to this. For example, an encoder unit of a class discrimination model that discriminates whether the input image 46I is an image of only a landscape or an image in which a person is shown may be used for the model for feature value vector derivation 50. Alternatively, an encoder unit of a semantic segmentation model that identifies the subject shown in the image 46 in units of pixels may be repurposed as the model for feature value vector derivation 50.

Examples of the color correction are as follows. That is, three-dimensional RGB gradation may be input, and four-dimensional CMYK (cyan, magenta, yellow, black) gradation may be output. The CMYK gradation is mainly used in a case where the image is printed by a printer. Therefore, for example, in a case where the image 46 obtained by being captured by the camera function of the user terminal 10 or the like is printed on a printer installed at user U's home or a paid printer installed at a convenience store, an aspect of performing the color correction from the three-dimensional RGB gradation to the four-dimensional CMYK gradation may be implemented.

The technology of the present disclosure may be applied not only to a still image but also to a moving image. In a case where the technology of the present disclosure is applied to the moving image, the entire moving image is regarded as one target image 46T, and the color correction is performed by regarding one frame constituting the moving image as one pixel 70T of the target image 46T. By such a method of performing the color correction, the capacity of the memory used for the color correction can be significantly reduced as compared with a case where the color correction is performed on the entire moving image as the target, and it is possible to achieve the reduction in memory capacity.

A hardware configuration of the computer constituting the image management server 12 can be modified in various ways. For example, the image management server 12 may be configured by a plurality of separate computers as hardware in order to improve processing capacity and reliability. For example, the functions of the request reception unit 40 and the screen distribution control unit 42, and the function of the processing unit 41 are distributed to two computers. In this case, the image management server 12 is configured by two computers. In addition, some or all of the functions of the image management server 12 may be performed by the user terminal 10.

As described above, the hardware configuration of the computer of the image management server 12 can be changed as appropriate according to the required performance, such as the processing capacity, the safety, and the reliability. Furthermore, it goes without saying that, in addition to the hardware, the APs, such as the image AP 30 and the operation program 35, can also be duplicated or distributed and stored in a plurality of storages for the purpose of ensuring the safety and the reliability.

In the above-described embodiment, for example, as a hardware structure of the processing unit that executes various types of processing, such as the browser control unit 32, the request reception unit 40, the processing unit 41, and the screen distribution control unit 42, various processors shown below can be used. The various processors include, for example, the CPUs 22A and 22B which are general-purpose processors executing software (the image AP 30 and the operation program 35) to function as various processing units, a programmable logic device (PLD), such as a field programmable gate array (FPGA), which is a processor whose circuit configuration can be changed after manufacture, and/or a dedicated electric circuit, such as an application specific integrated circuit (ASIC), which is a processor having a dedicated circuit configuration designed to execute specific processing.

One processing unit may be configured by one of these various processors, or may be configured by a combination of two or more processors of the same type or different types (for example, a combination of a plurality of FPGAs and/or a combination of a CPU and an FPGA). A plurality of processing units may be configured by one processor.

As an example in which the plurality of processing units are configured by one processor, first, as represented by a computer, such as a client and a server, there is a form in which one processor is configured by a combination of one or more CPUs and software, and the processor functions as the plurality of processing units. Second, as represented by a system on a chip (SoC) or the like, there is a form in which a processor, which implements the functions of the entire system including the plurality of processing units with a single integrated circuit (IC) chip, is used. As described above, as the hardware structure, the various processing units are configured by one or more of the various processors described above.

Further, more specifically, an electric circuit (circuitry) in which circuit elements such as semiconductor elements are combined can be used as the hardware structure of the various processors.

The technology of the present disclosure can also be combined as appropriate with various embodiments and/or various modification examples described above. Further, it goes without saying that the present disclosure is not limited to the above-described embodiment and various configurations can be adopted without departing from the scope of the technology of the present disclosure. Furthermore, the technology of the present disclosure extends to, in addition to the program, a non-transitory storage medium that stores the program, and a computer program product including the program.

The above-described contents and the above-illustrated contents are the detailed description of the parts according to the technology of the present disclosure, and are merely an example of the technology of the present disclosure. For example, the above description of the configuration, the function, the operation, and the effect are the description of examples of the configuration, the function, the operation, and the effect of the parts according to the technology of the present disclosure. Accordingly, it goes without saying that unnecessary parts may be deleted, new elements may be added, or elements may be replaced with respect to the above-described contents and the above-illustrated contents without departing from the gist of the technology of the present disclosure. In order to avoid complications and facilitate grasping the parts according to the technology of the present disclosure, in the above-described contents and the above-illustrated contents, the description of technical general knowledge and the like that do not particularly require description for enabling the implementation of the technology of the present disclosure are omitted.

In the present specification, "A and/or B" has the same meaning as "at least one of A or B". That is, "A and/or B" means that it may be only A, only B, or a combination of A and B. In the present specification, also in a case where three or more matters are expressed in association by "and/or", the same concept as "A and/or B" is applied.

All of the documents, the patent applications, and the technical standards described in the present specification are incorporated herein by reference to the same extent as in a case where each of the documents, patent applications, and technical standards is specifically and individually described by being incorporated by reference.

## Claims

1. An image processing device comprising:
a processor configured to:
derive a feature value vector from a target image for color correction; and
input a pair of the feature value vector and a pixel value of each pixel of the target image to a machine learning model for color correction, and cause the machine learning model for color correction to output a color-corrected pixel value.

2. The image processing device according to claim 1,
wherein the processor is configured to input the target image to a machine learning model for feature value vector derivation, and cause the machine learning model for feature value vector derivation to output the feature value vector.

3. The image processing device according to claim 2,
wherein the processor is configured to resize the target image to a size processable by the machine learning model for feature value vector derivation.

4. An operation method of an image processing device, the operation method comprising:
deriving a feature value vector from a target image for color correction; and
inputting a pair of the feature value vector and a pixel value of each pixel of the target image to a machine learning model for color correction, and causing the machine learning model for color correction to output a color-corrected pixel value.

5. An operation program of an image processing device, the operation program causing a computer to execute a process comprising:
deriving a feature value vector from a target image for color correction; and
inputting a pair of the feature value vector and a pixel value of each pixel of the target image to a machine learning model for color correction, and causing the machine learning model for color correction to output a color-corrected pixel value.
